# EUROPEAN PATENT APPLICATION

(11) **EP 3 345 814 A1**
(43) Date of publication of application: **11.07.2018**
(21) Application number: 17166202.6
(22) Date of filing: 12.04.2017
(51) Int. Cl.: B62H 5/06

(54) **SPECIALIZED STEERING LOCK FOR A BICYCLE**

(30) Priority: 06.01.2017 CN 201710009944
(71) Applicant: Shanghai Aozhi Network Technology Co., Ltd., Shanghai (CN)
(72) Inventor: ZHANG, Zhongqing, Shenzhen City, Guangdong (CN)
(74) Representative: Herrero & Asociados, S.L.

(57) **Abstract**

The present invention discloses a specialized steering lock for a bicycle, comprising an electronically controlled lock (1), a handlebar (5), a down tube (8), and an upper cover (11) of a hood, characterized in that: a front fork (7) is provided below one end of the down tube, a restraint ring (9) for a handlebar stem (6) is provided on the down tube closely above the front fork, the handlebar stem is provided above the restraint ring, the electronically controlled lock is mounted at one side of the handlebar stem close to a user, a lower cover (13) of the hood is provided at one side of the electronically controlled lock facing away from the user, a lock pin (2) is provided at an upper end of the handlebar stem closely above the electronically controlled lock, a hood button (3) is provided at a connection between the electronically controlled lock and the lock pin, outside of the hood button is packaged with a locking button (12), the handlebar is mounted on the handlebar stem, an upper cover (4) of the stem is provided at one end near the handlebar of the handlebar stem, the upper cover of the hood is mounted on the upper cover of the stem, a transparent cover (10) of the hood is provided at the center of the upper cover of the hood, and the electronically controlled lock is electrically connected to an internal power supply of the bicycle.

## Description

### TECHNICAL FIELD

The present invention relates to the field of bicycle locks, and in particular, to specialized steering locks for bicycles.

### BACKGROUND OF THE INVENTION

Bicycle, also known as bike or biking, generally is a small land vehicle with two wheels. After people ride a bicycle, they pedal the bicycle to provide power, which is a green and environmentally friendly vehicle. Its English name is bicycle, in which bi refers to two, and cycle refers to wheel, that is, two-wheel bike. In Chinese mainland, Taiwan, and Singapore, it is generally named as "bicycle" or "bike"; in HongKong and Macao, it is generally named as "biking" (actually, Cantonese generally makes a such call); and in Japan, it is named as "self-rotating bike". There are many kinds of bicycles, such as solo bicycle, tandem bicycle, etc.

The existing bicycle locks are inconvenient in use, and they mostly lock a front wheel or a rear wheel of the bicycle, which is easy to break the lock body, reducing anti-theft capability of the bicycle, thereby causing many problems of making the bicycle, for example, easy to be stolen, have poor safety performance, and inconvenient to be safely used by users. For this, we propose a specialized steering lock for a bicycle.

### SUMMARY OF THE INVENTION

The object of the invention is to provide a specialized steering lock for a bicycle to overcome the above problems in the prior art that the existing bicycle locks are inconvenient to be used and mostly lock the front or rear wheel, thereby easily breaking the lock body, reducing the anti-theft capability of the bicycle, and thus making the bicycle easy to be stolen, have poor safety performance and inconvenient to be safely used by users.

To achieve the above object, the present invention provides a specialized steering lock for a bicycle, comprising an electronically controlled lock, a handlebar, a down tube, and an upper cover of a hood, characterized in that: a front fork is provided below one end of the down tube, a restraint ring for a handlebar stem is provided on the down tube closely above the front fork, the handlebar stem is provided above the restraint ring, the electronically controlled lock is mounted at one side of the handlebar stem close to a user, a lower cover of the hood is provided at one side of the electronically controlled lock facing away from the user, a lock pin is provided at an upper end of the handlebar stem closely above the electronically controlled lock, a hood button is provided at a connection between the electronically controlled lock and the lock pin, outside of the hood button is packaged with a locking button, the handlebar is mounted on the handlebar stem, an upper cover of the stem is provided at one end near the handlebar of the handlebar stem, the upper cover of the hood is mounted on the upper cover of the stem, a transparent cover of the hood is provided at the center of the upper cover of the hood, and the electronically controlled lock is electrically connected to an internal power supply of the bicycle.

Preferably, the handlebar stem is fixedly connected to the handlebar via the upper cover of the stem.

Preferably, the electronically controlled lock is fixedly connected to the handlebar stem via screws.

Preferably, the lower cover of the hood is connected to the handlebar stem via bolts.

Preferably, the upper cover of the hood is connected to the upper cover of the stem via bolts.

Compared to the prior art, the present invention should have the following advantages. The locking button makes bicycles locked more conveniently, avoids inconvenience and damage to the wheel due to the locking for the front or rear wheel and saves locking time for users. Compared to the traditional bicycle locks, the electronically controlled lock involves less expenditure of force, is much easier to be operated, has a higher anti-theft capability, avoids the problem that the exposed traditional bicycle locks are easy to be destroyed, and is safer in use.

### BRIEF DESCRIPTION OF THE DRAWINGS

FIG. 1 is a schematic view of the present invention;
FIG. 2 is a schematic view of an external structure of the present invention.

### DETAILED DESCRIPTION OF THE INVENTION

Embodiments of the present invention will be described below in a clear and complete manner with reference to the drawings. Obviously, the embodiments below are only a part, but not all, of the embodiments. All other embodiments obtained by those of ordinary skill in the art based on the embodiments of the present invention without creative efforts shall fall within the protection scope of the present invention.

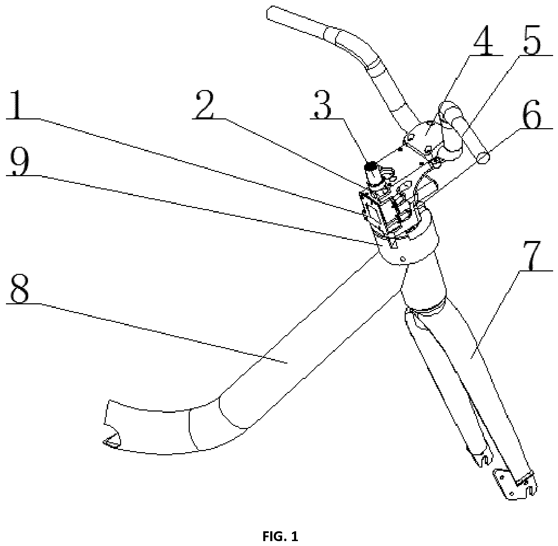

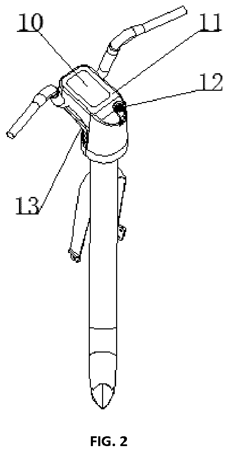

As shown in FIGS. 1 and 2, the present invention provides a specialized steering lock for a bicycle, including an electronically controlled lock 1, a handlebar 5, a down tube 8, and an upper cover 11 of a hood. A front fork 7 is provided below one end of the down tube 8, and a restraint ring 9 for a handlebar stem is provided on the down tube 8 closely above the front fork 7. The handlebar stem 6 is provided above the restraint ring 9. The electronically controlled lock 1 is mounted at one side of the handlebar stem 6 close to the user, and a lower cover 13 of the hood is provided at one side of the electronically controlled lock 1 facing away from the user. A lock pin 2 is provided at an upper end of the handlebar stem 6 closely above the electronically controlled lock 1. A hood button 3 is provided at a connection between the electronically controlled lock 1 and the lock pin 2. Outside of the hood button 3 is packaged with a locking button 12. The handlebar 5 is mounted on the handlebar stem 6. An upper cover 4 of the stem is provided at one end near the handlebar 5 of the handlebar stem 6. The upper cover 11 of the hood is mounted on the upper cover 4 of the stem. A transparent cover 10 of the hood is provided at the center of the upper cover 11 of the hood. The electronically controlled lock 1 is electrically connected to an internal power supply of the bicycle.

To facilitate fixation mounting of the handlebar stem 6 and the handlebar 5, in this embodiment, preferably, the handlebar stem 6 is fixedly connected to the handlebar 5 via the upper cover 4 of the stem.

To facilitate fixation mounting of the electronically controlled lock 1 and the handlebar stem 6, in this embodiment, preferably, the electronically controlled lock 1 is fixedly connected to the handlebar stem 6 via screws.

To facilitate improving sealing property of the handlebar stem 6, in this embodiment, preferably, the lower cover 13 of the hood is connected to the handlebar stem 6 via bolts.

To facilitate improving sealing property of the upper cover 4 of the stem, in this embodiment, preferably, the upper cover 11 of the hood is connected to the upper cover 4 of the stem via bolts.

The upper cover 11 of the hood of the present invention facilitates the sealing of the upper cover 4 of the stem, thereby preventing rainwater from entering the interior thereof and thus avoiding corrosion of the upper cover 4 of the stem, and also facilitates protection for the electronically controlled lock 1 inside, thereby avoiding the problem that the electronically controlled lock 1 is out of order when suffering from rainwater.

Operating principle and steps of the present invention are now described. Firstly, the stem is rotated about 45 degrees such that the lock pin 2 is aligned with the restraint ring 9 on the handlebar stem 6. Then, the locking button 12 is pressed, and further the hood button 3 is pressed, such that the lock pin 2 is inserted into a locking slot of the restraint ring 9 on the handlebar stem 6, and the locking is thus completed.

Although embodiments of the present invention have been shown and described, it should be understood by those of ordinary skill in the art that various changes, modifications, substitutions and alterations may be made herein without departing from the spirit and scope of the invention as defined in the appended claims and their equivalents.

### REDERENCE LIST

- 1: Electronically controlled lock
- 2: Lock pin
- 3: Hood button
- 4: Upper cover of a handlebar stem
- 5: Handlebar
- 6: Handlebar stem
- 7: Front fork
- 8: Down tube
- 9: Restraint ring for the handlebar stem
- 10: Transparent cover of a hood
- 11: Upper cover of the hood
- 12: Locking button
- 13: Lower cover of the hood

## Claims

1. A specialized steering lock for a bicycle, comprising an electronically controlled lock (1), a handlebar (5), a down tube (8), and an upper cover (11) of a hood, **characterized in that**: a front fork (7) is provided below one end of the down tube (8), a restraint ring (9) for a handlebar stem is provided on the down tube (8) closely above the front fork (7), the handlebar stem (6) is provided above the restraint ring (9), the electronically controlled lock (1) is mounted at one side of the handlebar stem (6) close to a user, a lower cover (13) of the hood is provided at one side of the electronically controlled lock (1) facing away from the user, a lock pin (2) is provided at an upper end of the handlebar stem (6) closely above the electronically controlled lock (1), a hood button (3) is provided at a connection between the electronically controlled lock (1) and the lock pin (2), outside of the hood button (3) is packaged with a locking button (12), the handlebar (5) is mounted on the handlebar stem (6), an upper cover (4) of the stem is provided at one end near the handlebar (5) of the handlebar stem (6), the upper cover (11) of the hood is mounted on the upper cover (4) of the stem, a transparent cover (10) of the hood is provided at the center of the upper cover (11) of the hood, and the electronically controlled lock (1) is electrically connected to an internal power supply of the bicycle.

2. The specialized steering lock for a bicycle of claim 1, **characterized in that** the handlebar stem (6) is fixedly connected to the handlebar (5) via the upper cover (4) of the stem.

3. The specialized steering lock for a bicycle of claim 1, **characterized in that** the electronically controlled lock (1) is fixedly connected to the handlebar stem (6) via screws.

4. The specialized steering lock for a bicycle of claim 1, **characterized in that** the lower cover (13) of the hood is connected to the handlebar stem (6) via bolts.

5. The specialized steering lock for a bicycle of claim 1, **characterized in that** the upper cover (11) of the hood is connected to the upper cover (4) of the stem via bolts.

6. The specialized steering lock for a bicycle of claim 1, **characterized in that**: in use, firstly, the stem is rotated about 45 degrees such that the lock pin (2) is aligned with the restraint ring (9) on the handlebar stem (6), then, the locking button (12) is pressed, and further the hood button (3) is pressed, such that the lock pin (2) is inserted into a locking slot of the restraint ring (9) on the handlebar stem (6), and the locking is thus completed.
